(19) Europäisches Patentamt
European Patent Office
Office européen des brevets

(11) **EP 2 271 927 B1**

(12) **FASCICULE DE BREVET EUROPEEN**

(45) Date de publication et mention de la délivrance du brevet:
**21.11.2012 Bulletin 2012/47**

(21) Numéro de dépôt: **09733426.2**

(22) Date de dépôt: **14.04.2009**

(51) Int Cl.:
***G01N 29/26*** *(2006.01)*

(86) Numéro de dépôt international:
**PCT/EP2009/054377**

(87) Numéro de publication internationale:
**WO 2009/127610 (22.10.2009 Gazette 2009/43)**

(54) **PROCÉDÉ ET DISPOSITIF DE CONTRÔLE NON-DESTRUCTIF PAR ULTRASONS AVEC SUIVI DE PROFIL DES PIÈCES INSPECTÉES**

VERFAHREN UND VORRICHTUNG FÜR NICHT-DESTRUKTIVE ULTRASCHALLÜBERWACHUNG MIT PROFILVERFOLGUNG VON GEPRÜFTEN TEILEN

METHOD AND DEVICE FOR NON-DESTRUCTIVE ULTRASOUND MONITORING WITH PROFILE TRACKING OF INSPECTED PARTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **18.04.2008 FR 0852640**

(43) Date de publication de la demande:
**12.01.2011 Bulletin 2011/02**

(73) Titulaire: **European Aeronautic Defence and Space Company**
**EADS France**
**75016 Paris (FR)**

(72) Inventeur: **ITHURRALDE, Guillaume**
**F-31770 Colomiers (FR)**

(74) Mandataire: **Fourcade, Emmanuelle**
**SCHMIT CHRETIEN SAS**
**Parc de Basso Cambo**
**4, Rue Paul Mesplé**
**31100 Toulouse (FR)**

(56) Documents cités:
**EP-A- 0 395 475    EP-A- 0 489 161**
**FR-A- 2 891 910    US-A1- 2005 000 279**

**EP 2 271 927 B1**

**Description**

La présente invention appartient au domaine du contrôle non-destructif par ultrasons de pièces de structures.

Plus particulièrement, la présente invention concerne le contrôle non-destructif sans contact de pièces pour lesquelles un suivi de profil doit être mis en oeuvre, notamment des pièces comportant des faces non planes.

Le contrôle non-destructif, notamment par ultrasons, est largement mis en oeuvre de nos jours, en particulier lors de la production de pièces dont la qualité doit être vérifiée comme par exemple dans l'industrie aéronautique.

Un dispositif de contrôle non-destructif par ultrasons comporte en général au moins une sonde ultrasonore, qui réalise une conversion d'un signal, en général électrique, en une onde ultrasonore et vice-versa.

Un milieu de couplage, bon conducteur des ondes ultrasonores, réalise une adaptation d'impédances acoustiques entre la sonde ultrasonore et une pièce à contrôler. Le milieu de couplage est le plus souvent un liquide, par exemple de l'eau ou parfois un gel. L'adaptation d'impédances acoustiques est en général assurée en immergeant au moins partiellement la sonde et la pièce dans le milieu de couplage, ou encore par apport continu du milieu de couplage entre la pièce et la sonde (comme c'est le cas dans les techniques d'inspection par jet d'eau).

Les ondes ultrasonores émises par la sonde en direction de la pièce, dites « ondes incidentes », sont en général partiellement réfléchies au moins aux interfaces entre des faces de la pièce et le milieu de couplage, et les ondes ultrasonores réfléchies, dites « échos », sont reçues par la sonde. Des mesures de caractéristiques desdits échos permettent d'évaluer des caractéristiques structurelles de la pièce.

Le contrôle non-destructif par ultrasons est en général réalisé avec une direction de propagation des ondes incidentes normale à une face avant de la pièce, pour assurer un meilleur taux de pénétration des ondes incidentes dans la pièce, notamment pour une pièce en matériau composite.

De plus une incidence normale à la face avant de la pièce permet d'avoir des directions de propagation des échos et des ondes incidentes sensiblement confondues, ce qui est avantageux dans le cas d'une utilisation en émission/réception d'une sonde ultrasonore directive, pour laquelle une légère différence entre les directions de propagation des ondes incidentes et des échos peut provoquer une chute importante des niveaux de puissance mesurés.

La conservation d'une direction de propagation des ondes incidentes sensiblement normale pour toute l'inspection de la pièce s'avère complexe dans le cas de pièces dont la face avant n'est pas parfaitement plane (pièces de forme complexe, ou des pièces comportant des défauts, ou simplement des pièces de grande taille déformées par gravité), surtout lorsque la sonde ultrasonore n'est pas au contact de la pièce.

Il convient alors, pour assurer une incidence sensiblement normale des ondes ultrasonores sur la face avant de la pièce, de réaliser un suivi de profil de ladite face avant. Ce suivi de profil doit en outre être rapide pour assurer des cadences importantes d'inspection et ne pas pénaliser les cycles de production des pièces.

Il est connu pour réaliser le suivi de profil d'utiliser un automate effectuant une adaptation de l'orientation de la sonde ultrasonore en fonction d'un fichier décrivant la forme de la pièce, par exemple le fichier résultant d'une conception assistée par ordinateur (ou « CAO»).

Si cette solution est intéressante d'un point de vue vitesse d'adaptation et d'inspection, il n'est pas rare d'avoir des pièces dont la forme diffère du fichier CAO, par exemple des pièces de grande taille déformées par gravité.

Dans le cas d'une sonde ultrasonore directive, il est connu d'adapter par tâtonnements l'orientation de ladite sonde de sorte à maximiser la puissance reçue, pour chaque position d'inspection de la sonde.

L'inconvénient majeur de cette solution est que ce suivi de profil est lent.

EP-A-0489161 décrit un procédé de contrôle non-destructif par ultrasons d'une pièce, utilisant une sonde ultrasonore comportant au moins trois zones de réception non-alignées, lequel dit procédé comporte une étape d'inspection dans laquelle des ondes ultrasonores sont émises pour au moins une position d'inspection de ladite sonde en direction d'une face avant de la pièce pour déterminer des caractéristiques structurelles de ladite pièce, le procédé comportant au préalable une étape d'apprentissage dans laquelle au moins trois valeurs de temps de vol sont mesurées pour au moins une position d'apprentissage de la sonde pour des ondes ultrasonores émises par ladite sonde, réfléchies par la face avant de la pièce et reçues par les trois zones de réception non-alignées, et dans lequel dit procédé, une estimation d'une inclinaison locale de la face avant de la pièce est calculée pour l'au moins une position d'inspection en fonction des trois valeurs de temps de vol mesurées, pour corriger dans l'étape d'inspection l'orientation d'une direction de propagation des ondes ultrasonores émises pour assurer une valeur d'un angle d'incidence sur la face avant de la pièce sensiblement égale à une valeur prédéfinie voulue pour l'au moins une position d'inspection.

Pour résoudre les problèmes susmentionnés, un procédé de contrôle non-destructif par ultrasons d'une pièce, tel que défini par la revendication 1, utilise une sonde ultrasonore comportant une pluralité de zones de réception non toutes alignées, et comporte de manière classique une étape d'inspection dans laquelle des ondes ultrasonores sont émises pour au moins une position d'inspection de ladite sonde en direction d'une face avant de la pièce pour en déterminer des caractéristiques structurelles.

Selon l'invention, le procédé comporte une étape d'apprentissage dans laquelle au moins trois valeurs de temps de vol sont mesurées pour au moins une position d'apprentissage de la sonde pour des ondes ultrasonores émises par ladite sonde, réfléchies par la face avant de la pièce et reçues par un sous-ensemble des zones de réception comportant au moins trois zones de réception non alignées, le nombre de zones de réception utilisées dans l'étape d'inspection pour recevoir des ondes ultrasonores réfléchies par la pièce étant supérieur au nombre de zones de réception du sous-ensemble utilisé dans l'étape d'apprentissage. Une estimation d'une inclinaison locale de la face avant de la pièce est calculée pour l'au moins une position d'inspection en fonction des au moins trois valeurs de temps de vol mesurées, pour corriger dans l'étape d'inspection l'orientation d'une direction de propagation des ondes ultrasonores émises pour assurer une valeur d'un angle d'incidence sur la face avant de la pièce sensiblement égale à une valeur prédéfinie voulue pour l'au moins une position d'inspection.

De préférence, les ondes ultrasonores sont émises dans l'étape d'apprentissage et/ou l'étape d'inspection par au moins une zone d'émission de la sonde de superficie égale ou supérieure à celle de chaque zone de réception.

Dans le cas où la sonde comporte un réseau matriciel d'au moins trois transducteurs élémentaires non alignés, chaque zone de réception et chaque zone d'émission est constituée d'au moins un transducteur élémentaire.

Pour améliorer la précision des mesures des au moins trois valeurs de temps de vol, celles-ci sont mesurées avec des zones de réception non adjacentes de la sonde.

Si la ligne de grande pente des inclinaisons locales de la face avant de la pièce n'est pas connue, l'estimation de l'inclinaison locale pour l'au moins une position d'inspection est obtenue en estimant deux angles plans d'inclinaison locale définis dans deux plans non parallèles entre eux et localement orthogonaux à la face avant de la pièce.

De préférence des valeurs de temps de vol sont mesurées pour une pluralité de positions d'apprentissage et au moins trois valeurs de temps de vol sont mesurées pour chaque position d'apprentissage.

Si le procédé comporte une pluralité de positions d'inspection, une estimation de l'inclinaison locale est calculée pour chaque position d'inspection soit par interpolation ou extrapolation d'estimations d'inclinaisons locales calculées pour différentes positions d'apprentissage, soit en fonction d'au moins trois valeurs de temps de vol mesurées pour au moins deux positions d'apprentissage différentes.

Selon l'invention, un dispositif de contrôle non-destructif par ultrasons d'une pièce, comporte une sonde ultrasonore comportant un réseau matriciel de transducteurs élémentaires déterminant une pluralité de zones de réception non toutes alignées, des moyens mécaniques aptes à orienter la direction de propagation des ondes ultrasonores émises par la sonde et à déplacer ladite sonde par rapport à la pièce, et des moyens de commande desdits moyens mécaniques.

Le dispositif comporte également :

- des moyens de calcul d'estimations d'inclinaisons locales d'une face avant de la pièce en fonction de valeurs de temps de vol mesurées au cours d'un apprentissage préalable de la face avant de la pièce pour des ondes ultrasonores émises par la sonde et reçues par un sous-ensemble de zones de réception comportant au moins trois zones de réception non alignées,
- des moyens de stockage des estimations des inclinaisons locales.

Au cours du contrôle non-destructif des caractéristiques structurelles de la pièce, les moyens de commande orientent la sonde en fonction des estimations des inclinaisons locales mémorisées dans les moyens de stockage et utilisent un nombre de zones de réception supérieur au nombre de zones de réception du sous-ensemble utilisé au cours de l'apprentissage préalable.

De préférence, le découpage du réseau matriciel de la sonde ultrasonore est de forme sensiblement rectangulaire ou carrée. De plus, chaque transducteur élémentaire est de forme rectangulaire, hexagonale ou circulaire.

La description suivante de modes de réalisation de l'invention est faite en se référant aux figures qui représentent de manière non limitative :

- Figure 1 : une vue schématique d'un dispositif de contrôle non-destructif par ultrasons en immersion,
- Figure 2 : une vue schématique d'une sonde utilisée dans le procédé de contrôle non-destructif selon l'invention,
- Figures 3a, 3b : des vues schématiques de sections de la sonde de la figure 2 et d'une pièce dans deux plans de section différents, illustrant des notations utilisées dans la description,
- Figures 3c et 3d : des vues schématiques dans le plan de section de la figure 3a, après correction de l'orientation de la sonde,
- Figure 4 : une vue schématique d'une section de la sonde de la figure 2 et de la pièce, dans le cas de zones d'émission de superficies supérieures à celles de zones de réception,
- Figure 5 : une vue schématique d'un réseau matriciel de transducteurs élémentaires, montrant des zones de réception utilisées pour estimer le profil de la pièce inspectée, selon un mode de mise en oeuvre du procédé de l'invention,
- Figure 6 : une vue schématique d'un réseau matriciel de transducteurs élémentaires, montrant des zones d'émission et de réception utilisées pour réaliser une mesure élémentaire,
- Figures 7a, 7b, 7c et 7d : des vues schématiques de réseaux matriciels de transducteurs élémentaires selon différents modes de réalisation.

La présente invention concerne un procédé de contrôle non-destructif par ultrasons de pièces, notamment des pièces comportant des faces non planes, et un dispositif particulièrement adapté pour la mise en oeuvre dudit procédé.

Un procédé de contrôle non-destructif par ultrasons utilise au moins une sonde 1 ultrasonore, pour émettre des ondes ultrasonores en direction d'une pièce 2 dont on cherche à déterminer des caractéristiques structurelles telles qu'une épaisseur, un taux de porosité, la présence de défauts, etc.

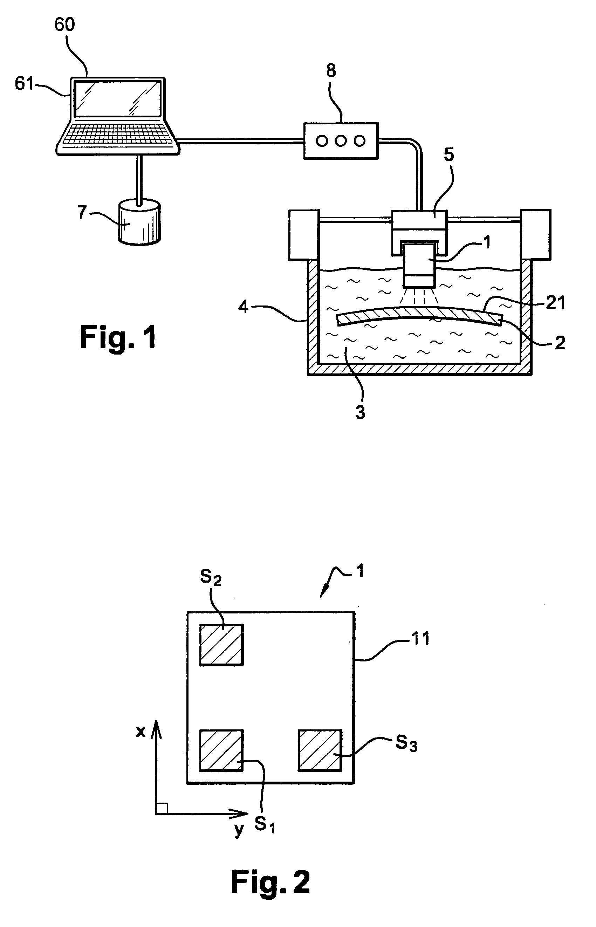

L'espace séparant la sonde 1 de la pièce 2 à contrôler est généralement occupé par un milieu de couplage 3 bon conducteur des ondes ultrasonores. Par exemple la pièce 2 et la sonde 1 sont placés dans une cuve 4 que remplit le milieu de couplage 3, tel que représenté sur la figure 1.

Le procédé comporte de manière classique une étape d'inspection, dans laquelle des ondes ultrasonores sont émises par la sonde 1 en direction de la pièce 2 pour une pluralité de positions de ladite sonde dans l'espace, dites « positions d'inspection ».

Une partie de l'énergie des ondes incidentes est réfléchie aux interfaces entre des parties d'impédances acoustiques différentes, notamment pour des interfaces entre le milieu de couplage 3 et toutes les faces de la pièce dont une face avant 21 correspondant à la face de la pièce 2 la plus proche de la sonde 1, et éventuellement pour des interfaces internes à ladite pièce.

Les caractéristiques structurelles de la pièce 2 sont évaluées à partir de caractéristiques des ondes ultrasonores réfléchies ou échos, telles que des valeurs d'intensité ou des temps de propagation.

Une direction de propagation D des ondes ultrasonores correspond à la direction principale d'un faisceau formé par les ondes ultrasonores.

La direction de propagation D des ondes incidentes est de préférence orientée dans chaque position d'inspection de sorte à être sensiblement normale à une surface visée sur ladite face avant.

Il est à noter que, bien que le cas d'une incidence normale des ondes incidentes soit le seul décrit dans la suite de l'exposé, le procédé selon l'invention est également applicable lorsque des directions de propagation des ondes incidentes doivent être obliques, et dont l'obliquité recherchée est connue a priori pour chaque surface visée.

Pour réaliser le contrôle non-destructif par ultrasons, la sonde 1 n'est pas en contact avec la face avant 21 de la pièce 2. Il est souhaitable d'adapter l'orientation de la direction de propagation D des ondes incidentes en fonction des inclinaisons locales des surfaces visées par rapport à des surfaces visées théoriques orthogonales aux directions de propagation des ondes ultrasonores, ce qui suppose de déterminer au préalable lesdites inclinaisons locales.

Selon l'invention, la sonde 1 comporte un réseau matriciel disposant d'au moins trois zones de réception différentes qui ne sont pas alignées, et comporte une étape d'apprentissage du profil de la face avant 21 de la pièce 2, exécutée avant l'étape d'inspection pour chaque pièce inspectée.

Chaque zone de réception, par exemple réalisée dans un matériau piézoélectrique, est de préférence peu directive pour permettre de recevoir des ondes réfléchies qui ont une direction de propagation différente de la direction de propagation D du fait des inclinaisons locales de la face avant 21 de la pièce 2. C'est par exemple le cas si les dimensions de chaque zone de réception sont petites par rapport aux longueurs d'ondes des ondes ultrasonores considérées dans le milieu de couplage 3.

Au cours de l'étape d'apprentissage, des ondes ultrasonores sont émises en direction de la pièce 2 pour une pluralité de positions de la sonde 1 par rapport à ladite pièce, dites « positions d'apprentissage ».

L'orientation de la sonde 1 pour chaque position d'apprentissage est avantageusement déterminée pour minimiser les valeurs des inclinaisons locales recherchées, en fonction d'informations connues a priori sur la forme de la pièce 2, par exemple accessibles dans un fichier de conception assistée par ordinateur représentant ladite pièce ou, dans le cas d'une inspection d'une série de pièces semblables, des informations obtenues pour une ou des pièces de la série.

L'étape d'apprentissage repose sur la mesure de temps de vols, c'est-à-dire de temps de propagation, entre l'émission d'ondes ultrasonores et la réception d'échos correspondant à la réflexion des ondes ultrasonores sur la face avant 21 de la pièce 2.

Pour chaque position d'apprentissage, au moins trois valeurs de temps de vol sont mesurées pour des échos reçus par des zones de réception différentes et non alignées, avec une orientation constante et connue de la sonde.

A partir des au moins trois valeurs de temps de vol par position d'apprentissage, les inclinaisons locales des surfaces visées lors de l'étape d'inspection, supposées de courbure négligeable à l'échelle des distances entre les zones de réception considérées, sont estimées par des opérations trigonométriques, pour corriger au cours de l'étape d'inspection l'orientation des directions de propagation des ondes ultrasonores pour chaque position d'inspection.

Dans un but de simplification, les opérations effectuées pendant l'étape d'apprentissage sont décrites dans un premier temps dans le cas d'une sonde 1, représentée sur la figure 2, utilisant un réseau matriciel 11 simple muni de trois surfaces actives $S_1$, $S_2$ et $S_3$, chaque surface active disposant d'une zone d'émission des ondes ultrasonores respectivement $\varepsilon_1$, $\varepsilon_2$ et $\varepsilon_3$, et d'une zone de réception respectivement $\rho_1$, $\rho_2$ et $\rho_3$.

Les surfaces actives $S_1$ et $S_2$ sont agencées suivant un axe x, et les surfaces actives $S_1$ et $S_3$ sont agencées suivant un axe y sécant à l'axe x, avantageusement orthogonal à l'axe x, et formant avec ledit axe x un plan P dudit réseau matriciel. La direction de propagation D des ondes ultrasonores émises par chaque zone d'émission $\varepsilon_1$, $\varepsilon_2$, $\varepsilon_3$ est orthogonale au plan P.

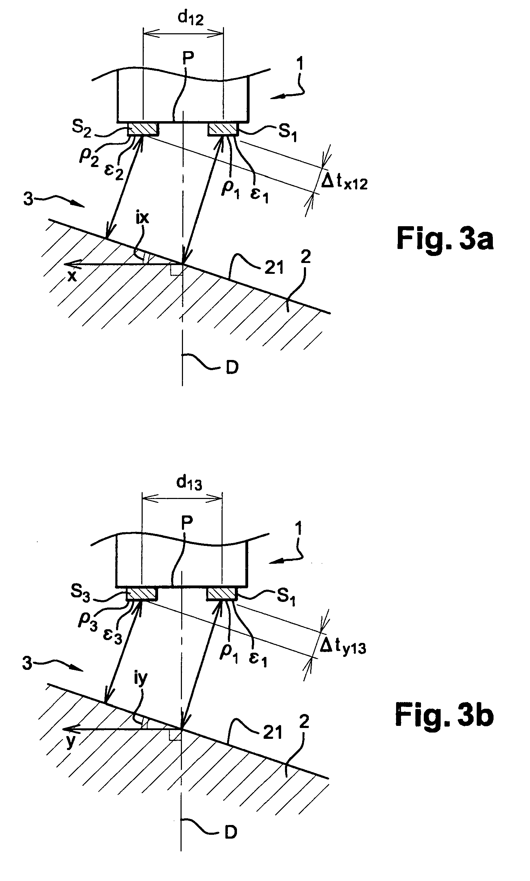

Les figures 3a et 3b représentent partiellement la sonde 1 et la pièce 2 dans des plans de section Px et Py orthogonaux au plan P et qui contiennent respectivement l'axe x et l'axe y, dans le cas de zones d'émission confondues avec les zones de réception.

L'inclinaison locale d'une surface visée de la face avant 21 est définie dans un plan d'incidence Pi, orthogonal à ladite surface visée et contenant la direction de propagation D, par un angle entre le plan P et une intersection du plan d'incidence Pi avec la surface visée.

Le plan d'incidence Pi n'est en général pas connu, et l'inclinaison locale est définie de manière équivalente par deux angles plans pris dans deux plans non parallèles. Dans les plans Px et Py, l'inclinaison locale est définie par un angle ix entre le plan P et une intersection du plan Px avec la surface visée, et par un angle iy entre le plan P et une intersection du plan Py avec la surface visée.

La zone d'émission $\varepsilon_1$ de la surface active $S_1$ émet un faisceau divergent d'ondes ultrasonores qui sont réfléchies par la face avant 21, et en partie reçues par la zone de réception $\rho_1$. Un temps de vol $t_1$ est mesuré pour le premier écho détecté, qui correspond à l'onde ultrasonore réfléchie ayant parcouru la distance la plus courte.

Des temps de vol $t_2$ et $t_3$ sont mesurés de façon similaire à partir des échos reçus par les zones de réception $\rho_2$ et $\rho_3$.

A partir des mesures des temps de vol $t_1$, $t_2$ et $t_3$, une estimation $\theta = (\theta x, \theta y)$ de l'inclinaison locale de la surface visée est déterminée pour la position d'apprentissage considérée en calculant une estimation $\theta x = \theta x_{(1-2)}$ de l'angle ix et une estimation $\theta y = \theta y_{(1-3)}$ de l'angle iy.

Une valeur $\Delta te_{x12}$ d'une différence de temps de vol $\Delta t_{x12} = t_1 - t_2$ est calculée à partir des mesures des temps de vol $t_1$ et $t_2$, et l'estimation $\theta x$ est calculée suivant l'expression :

$$\theta x = \theta x_{(1-2)} = asin[(\Delta te_{x12} \times ve_1) / (2 \times de_{12})] \qquad (1)$$

où $asin(\varphi)$ correspond à la fonction arcsinus réciproque de la fonction sinus, $de_{12}$ est une valeur d'une distance $d_{12}$ entre les centres des zones de réception $\rho_1$ et $\rho_2$, et $ve_1$ est une valeur d'une vitesse de propagation $v_1$ des ondes ultrasonores dans le milieu de couplage 3, les valeurs $de_{12}$ et $ve_1$ étant des valeurs théoriques ou des valeurs mesurées.

De la même manière, en calculant à partir des mesures des temps de vol $t_1$ et $t_3$ une valeur $\Delta te_{y13}$ d'une différence de temps de vol $\Delta t_{y13} = t_1 - t_3$, et en considérant une valeur $de_{13}$ de la distance $d_{13}$ entre les centres des zones de réception $\rho_1$ et $\rho_3$, l'estimation $\theta y$ est déterminée suivant l'expression :

$$\theta y = \theta y_{(1-3)} = asin[(\Delta te_{y13} \times ve_1) / (2 \times de_{13})] \qquad (2)$$

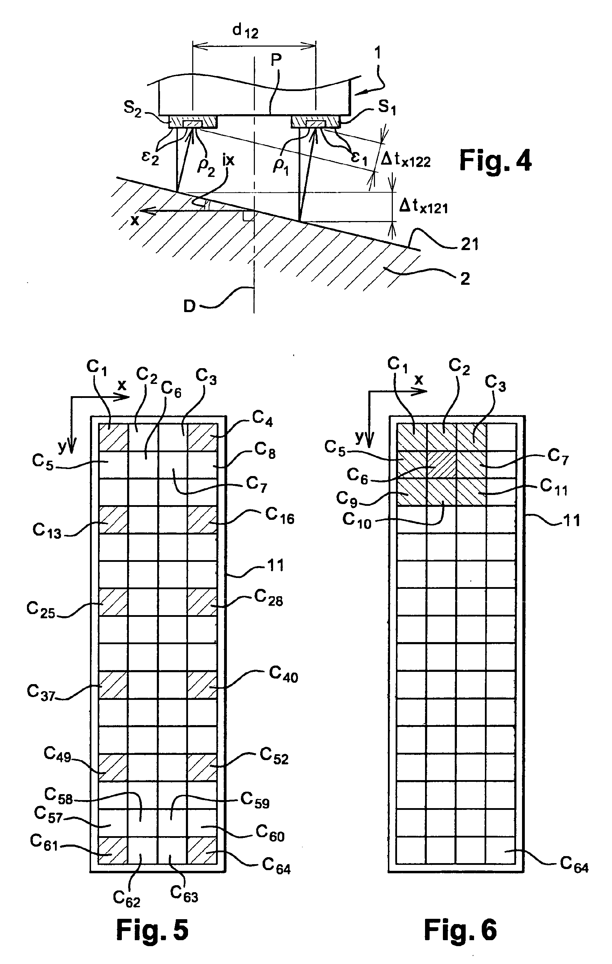

La figure 4 représente partiellement la sonde 1 et la pièce 2, dans le plan Px, dans le cas où les zones d'émission ont des superficies sensiblement supérieures à celles des zones de réception.

Dans ce cas, les faisceaux d'ondes ultrasonores émis sont sensiblement directifs suivant la direction de propagation D des ondes ultrasonores qui est orthogonale au plan P du réseau matriciel 11.

La différence de temps de vol $\Delta t_{x12}$ est égale à $\Delta t_{x121} + \Delta t_{x122}$, où $\Delta t_{x121}$ correspond à la différence de temps de propagation des ondes incidentes pour arriver sur la face avant 21, et $\Delta t_{x122}$ correspond à la différence de temps de propagation entre les échos pour arriver sur les zones de réception $\rho_1$ et $\rho_2$.

L'angle ix vérifie les expressions suivantes :

$$sin(ix) = (\Delta t_{x121} \times v_1) / (2 \times d_{12}) \qquad (3a)$$

$$tan(ix) = (\Delta t_{x122} \times v_1) / (2 \times d_{12}) \qquad (3b)$$

Ce type de transducteur élémentaire est utilisé pour des pièces pour lesquelles on sait a priori que les valeurs des inclinaisons locales sont faibles. De ce fait, les fonctions sinus et tangente sont, pour calculer l'estimation $\theta x$, approchées par leur développement limité en zéro, et $sin(\varphi) \cong tan(\varphi) \cong \varphi$. De ce fait, $\Delta t_{x121} \cong \Delta t_{x122} \cong \Delta t_{x12}/2$.

En considérant les équations (3a) et (3b), l'estimation $\theta x$ est calculée suivant l'expression :

$$\theta x = \theta x_{(1-2)} = (\Delta te_{x12} \times ve_1) / (4 \times de_{12}) \qquad (4)$$

Dans le cas d'un réseau matriciel disposant de plus de trois zones de réception distinctes, il n'est pas nécessaire, quoique non exclu, de mesurer des temps de vol pour chaque zone de réception dans l'étape d'apprentissage.

De préférence, seul un sous-ensemble des zones de réception est utilisé en réception pour la mesure des temps de vols associés. Ce sous-ensemble de zones de réception comporte un nombre de zones de réception inférieur au nombre de zones de réception utilisées au cours de l'étape d'inspection, pour réduire la durée de l'étape d'apprentissage par rapport à la durée de l'étape d'inspection et/ou réduire la quantité de données à mémoriser. De préférence, tout ou partie des zones de réception utilisées dans l'étape d'apprentissage sont également utilisées dans l'étape d'inspection.

Il est en outre avantageux de considérer des zones de réception non-adjacentes, c'est-à-dire des zones de réception séparées par d'autres zones de réception, afin d'améliorer la précision relative des écarts de temps de vol et des différentes estimations d'angles de correction.

Sur la figure 5, on a représenté un réseau matriciel 11 a disposant de 64 transducteurs élémentaires $C_1$ à $C_{64}$ formant un réseau rectangulaire dense comportant 16 lignes (parallèles à l'axe x) et 4 colonnes (parallèles à l'axe y), la ligne p comportant les transducteurs élémentaires $C_{1+4p}$, $C_{2+4p}$, $C_{3+4p}$ et $C_{4+4p}$, $0 < p < 15$, chaque transducteur élémentaire pouvant être utilisé en émission et en réception.

Chaque zone de réception est constituée d'au moins un transducteur élémentaire.

Chaque zone d'émission est également constituée d'au moins un transducteur élémentaire ; dans un mode particulier de mise en oeuvre, chaque zone d'émission comporte au moins autant de transducteurs élémentaires qu'une zone de réception associée.

Dans le cas où chaque zone de réception est constituée d'un transducteur élémentaire, les zones de réception utilisées pour la mesure de temps de vol dans l'étape d'apprentissage sont par exemple les transducteurs élémentaires formant les sommets de carrés de quatre fois quatre transducteurs élémentaires $C_1$, $C_4$, $C_{13}$, $C_{16}$, $C_{25}$, $C_{28}$, $C_{37}$, $C_{40}$, $C_{49}$, $C_{52}$, $C_{61}$ et $C_{64}$ (hachurés sur la figure 5).

Dans ce cas il est avantageux de calculer des estimations $\theta x$ et $\theta y$ dont les valeurs sont égales à des moyennes de plusieurs estimations des angles respectivement ix et iy.

Pour l'exemple considéré sur la figure 5, les estimations suivantes sont calculées :

- $\theta x_{(12k+1 \; ; \; 12k+4)}$ pour les transducteurs élémentaires $C_{12k+1}$ et $C_{12k+4}$, $0 \leq k \leq 5$,
- $\theta y_{(12l+1 \; ; \; 12l+13)}$ et $\theta y_{(12l+4; \; 12l+16)}$ pour les transducteurs élémentaires $C_{12l+1}$ et $C_{12l+13}$ d'une part, et $C_{12l+4}$ et $C_{12l+16}$ d'autre part, $0 \leq l \leq 4$.

Les estimations $\theta x$ et $\theta y$ sont calculées suivant les expressions :

$$\theta x = 1/6 \times \sum_{k=0}^{5} [\theta x_{(12k+1 \; ; \; 12k+4)}] \qquad (5a)$$

$$\theta y = 1/10 \times \sum_{l=0}^{4} [\theta y_{(12l+1 \; ; \; 12l+13)} + \theta y_{(12l+4 \; ; \; 12l+16)}] \qquad (5b)$$

Il est à noter que, dans l'étape d'apprentissage, les temps de vol sont mesurés en émettant des ondes ultrasonores soit séquentiellement, soit simultanément.

Si les temps de vol sont mesurés simultanément, de préférence on émet avec une seule zone d'émission formée par tous les transducteurs élémentaires.

Dans le cas où les temps de vol sont mesurés séquentiellement, plusieurs variantes sont possibles :

- émettre avec une zone d'émission confondue avec la zone de réception considérée ; cette variante correspond à mode préféré de mise en oeuvre notamment dans le cas de désorientations importantes,
- émettre avec une zone d'émission de superficie supérieure à la superficie de la zone de réception considérée (par exemple émettre avec une pluralité de transducteurs élémentaires si la zone de réception consiste en un transducteur élémentaire),

- émettre avec une zone d'émission constituée de tous les transducteurs élémentaires de la sonde 1, soit simultanément, soit avec des retards qui génèrent un front d'onde divergent.

Le nombre et la position dans le réseau matriciel des zones de réception utilisées pour mesurer des temps de vol ne sont pas limités à l'exemple décrit, étant acquis qu'il faut mesurer au moins trois temps de vol par position d'apprentissage, avec des zones de réception non alignées.

Dans le cas général d'une pluralité de positions d'apprentissage et d'une pluralité de positions d'inspection, au moins trois temps de vol sont mesurés pour chaque position d'apprentissage.

Si les positions d'apprentissage et les positions d'inspection sont identiques, des estimations des inclinaisons locales de la face avant 21 sont déterminées comme décrit précédemment pour chaque position d'apprentissage/ acquisition.

En pratique, le nombre de positions d'apprentissage est de préférence inférieur au nombre de positions d'inspection, essentiellement pour des raisons de rapidité d'exécution de l'étape d'apprentissage. Dans ce cas, lesdites positions d'apprentissage sont de préférence un sous-ensemble des positions d'inspection, mais pas nécessairement.

Plusieurs variantes sont alors possibles pour estimer l'inclinaison locale de la face avant 21 pour une position d'inspection non confondue avec une position d'apprentissage, dont certaines sont décrites ci-après, de manière non limitative.

Dans un premier mode de mise en oeuvre, l'estimation de l'inclinaison locale pour la position d'inspection considérée est calculée par interpolation ou extrapolation des estimations des inclinaisons locales pour toutes les positions d'apprentissage ou juste les plus proches de ladite position d'inspection considérée.

Dans un autre mode de mise en oeuvre, l'estimation de l'inclinaison locale pour la position d'inspection considérée est déterminée en fonction d'au moins trois valeurs de temps de vol mesurées pour au moins deux positions d'apprentissage, de préférence les plus proches de la position d'inspection considérée, les zones de réception concernées n'étant pas alignées, en calculant des expressions semblables à celles décrites précédemment.

Le contrôle non-destructif des caractéristiques structurelles de la pièce 2 est ensuite réalisé au cours de l'étape d'inspection.

Lors de l'étape d'inspection, des ondes ultrasonores sont émises pour les positions d'inspection de la sonde 1, en corrigeant l'orientation des directions de propagation des ondes incidentes en fonction des estimations des inclinaisons locales de la face avant 21 de la pièce 2.

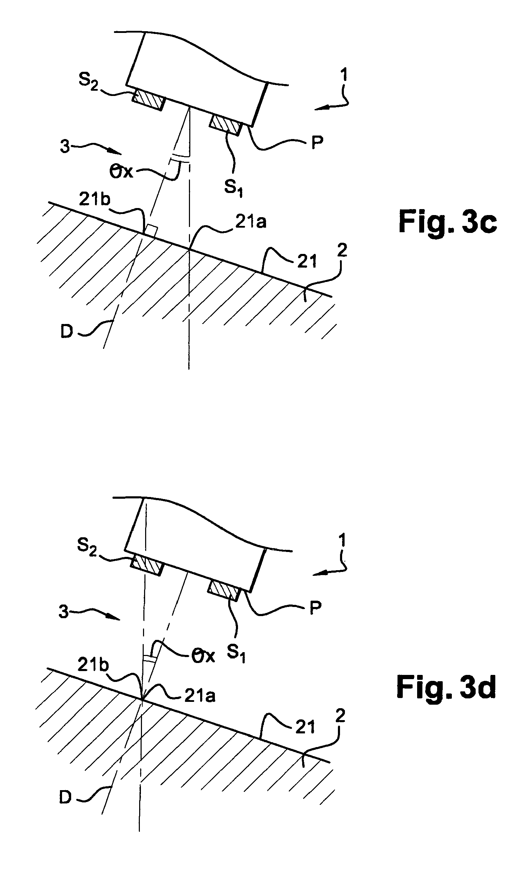

Un exemple de correction d'orientation est représenté sur la figure 3c, pour le cas représenté sur la figure 3a. Dans ce cas, la correction d'orientation dans le plan Px est réalisée en inclinant l'axe x du réseau matriciel 11 d'un angle égal à l'estimation $\theta$x, de sorte que les ondes ultrasonores ont une incidence sensiblement normale sur la face avant 21 de la pièce 2 dans ledit plan Px.

Comme illustré sur la figure 3c, la surface visée après la correction angulaire, sensiblement centrée sur un point 21 b, est décalée par rapport à la surface visée sans ladite correction, sensiblement centrée sur un point 21 a. Si nécessaire, une correction de la position de la sonde 1 dans l'espace est, dans un mode particulier, également mise en oeuvre en appliquant des procédés connus de sorte que la surface visée après correction est sensiblement confondue avec la surface visée avant correction, tel que représenté sur la figure 3d.

Au cours de l'étape d'inspection, il est préférable d'utiliser des zones d'émission avec des superficies supérieures à celles des zones de réception. Il est à noter que les zones d'émission et de réception utilisées dans l'étape d'inspection peuvent différer de celles utilisées dans l'étape d'apprentissage. Notamment, un nombre de zones de réception plus important est avantageusement utilisé dans l'étape d'inspection pour avoir une meilleure résolution spatiale.

Par exemple chaque zone d'émission est constituée de plusieurs transducteurs élémentaires et chaque zone de réception est constituée d'un nombre inférieur de transducteurs élémentaires.

L'utilisation de superficies plus grandes en émission qu'en réception permet d'être plus directif en émission (amélioration de la précision de l'inspection) qu'en réception (moins sensible aux inclinaisons locales résiduelles).

Comme illustré sur la figure 6 dans le cas du réseau 11 a de la figure 5, une zone d'émission est par exemple constituée de neuf transducteurs élémentaires ($C_1$, $C_2$, $C_3$, $C_5$, $C_6$, $C_7$, $C_9$, $C_{10}$, et $C_{11}$, hachurés à +45° et -45° sur la figure) et une zone de réception comporte un seul transducteur élémentaire au centre de la zone d'émission ($C_6$, hachuré à +45° uniquement) pour une mesure élémentaire. Des mesures sont par exemple obtenues sans déplacer la sonde en considérant successivement (ou simultanément) des zones de réception correspondant à tous les transducteurs élémentaires ne se trouvant pas sur le bord dudit réseau. Le nombre de zones de réception est dans cet exemple égal à 28, et est supérieur au nombre de zones de réception utilisées au cours de l'étape d'apprentissage dans l'exemple représenté sur la figure 5 (égal à 12).

Il est à noter que le mode préféré de mise en oeuvre du procédé consiste à exécuter l'étape d'apprentissage pour toutes les positions d'apprentissage, puis à exécuter l'étape d'inspection pour toutes les positions d'inspection. Un autre mode de mise en oeuvre consiste, notamment dans le cas où les positions d'apprentissage et les positions d'inspection sont confondues, à exécuter successivement les étapes d'apprentissage et d'inspection pour chaque position d'apprentissage/inspection.

Pour mettre en oeuvre le procédé selon l'invention, on utilise avantageusement un dispositif, représenté sur la figure 1, qui comporte la sonde 1 utilisant un réseau matriciel d'au moins trois transducteurs élémentaires non alignés, un appareil 8 de génération des impulsions électriques d'excitation de la sonde et de conditionnement des signaux reçus, des moyens mécaniques 5 aptes à orienter la direction de propagation D des ondes ultrasonores émises par la sonde 1 et à déplacer ladite sonde par rapport à la pièce 2, et des moyens de commande 60 desdits moyens mécaniques.

Le dispositif comporte également des moyens de calcul 61 (un microcontrôleur, etc.) des estimations $\theta$ des inclinaisons locales de la face avant 21 de la pièce 2 en fonction de temps de vols d'ondes ultrasonores émises par la sonde 1 au cours de l'étape d'apprentissage et des moyens de stockage 7 desdites estimations.

Au cours de l'étape d'inspection, les moyens de commande 60 orientent la sonde 1 en fonction des estimations $\theta$ mémorisées dans les moyens de stockage 7 et utilisent un nombre de zones de réception supérieur au nombre de zones de réception utilisé au cours de l'étape d'apprentissage.

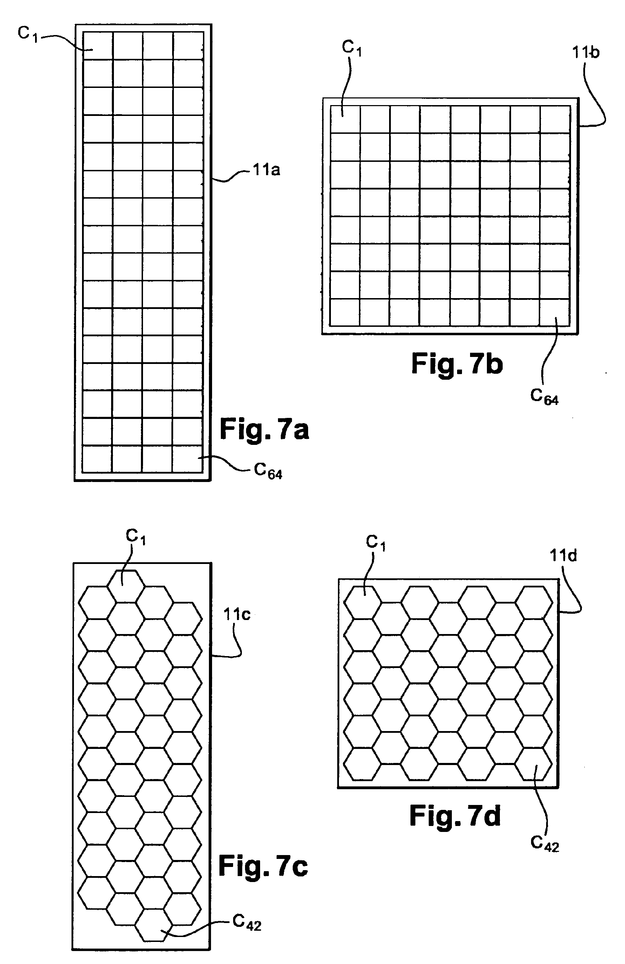

La figure 7a représente le réseau matriciel 11a à découpage rectangulaire à quatre fois seize transducteurs des figures 5 et 6, dans lequel les transducteurs élémentaires $C_1$ à $C_{64}$ sont de forme sensiblement carrée.

La figure 7b représente un réseau matriciel 11b à découpage sensiblement carré à huit fois huit transducteurs, dans lequel les transducteurs élémentaires sont également de forme sensiblement carrée.

Les figures 7c et 7d représentent des réseaux matriciels 11 c et 11 d suivant sensiblement les mêmes découpages que les réseaux matriciels respectivement 11a et 11 b, mais dans lesquels la forme de chaque transducteur élémentaire est hexagonale.

Dans un autre mode de réalisation, non représenté, la forme de chaque transducteur élémentaire est circulaire.

L'utilisation de transducteurs élémentaires hexagonaux permet des acquisitions en quinconce avec des pas d'incrément qui valent la moitié de la taille des transducteurs élémentaires, et les faisceaux d'ondes ultrasonores émis par lesdits transducteurs élémentaires sont en outre plus axisymétriques.

Le choix du découpage du réseau matriciel dépend notamment des pièces à contrôler, en particulier des courbures locales. Par exemple l'utilisation d'un réseau matriciel à découpage rectangulaire est adaptée aux pièces longues à faible courbure suivant la grande longueur dudit réseau, et l'utilisation d'un réseau matriciel à découpage sensiblement carré est adaptée aux pièces à courbures équivalentes dans les deux directions dudit réseau.

La présente invention permet d'améliorer la qualité des résultats de l'inspection ultrasonore de pièces de structure, en introduisant une étape d'apprentissage pour chaque pièce inspectée. Cette étape d'apprentissage est rapide du fait d'une utilisation de sondes à réseaux matriciels de transducteurs élémentaires et d'une détermination numérique par des calculs peu complexes des corrections d'orientation à effectuer.

## Revendications

**1.** Procédé de contrôle non-destructif par ultrasons d'une pièce (2), utilisant une sonde (1) ultrasonore comportant une pluralité de zones de réception ($\rho_1$-$\rho_3$) non toutes alignées, lequel dit procédé comportant une étape d'inspection dans laquelle des ondes ultrasonores sont émises pour au moins une position d'inspection de ladite sonde en direction de la pièce (2), une étape d'apprentissage dans laquelle au moins trois valeurs de temps de vol sont mesurées pour au moins une position d'apprentissage de la sonde (1) pour des ondes ultrasonores émises par ladite sonde, réfléchies par une face avant (21) de la pièce (2) et reçues par un sous-ensemble des zones de réception comportant au moins trois zones de réception ($\rho_1$-$\rho_3$) non alignées,
et en ce qu'une estimation d'une inclinaison locales de la face avant (21) de la pièce (2) est calculée pour l'au moins une position d'inspection en fonction des au moins trois valeurs de temps de vol mesurées, pour corriger dans l'étape d'inspection l'orientation d'une direction de propagation (D) des ondes ultrasonores émises pour assurer une valeur d'un angle d'incidence sur la face avant (21) de la pièce (2) sensiblement égale à une valeur prédéfinie voulue pour l'au moins une position d'inspection
**caractérisé en ce que** le nombre de zones de réception ($\rho_1$-$\rho_3$) utilisées dans l'étape d'inspection pour recevoir des ondes ultrasonores réfléchies par la pièce (2) est supérieur au nombre de zones de réception ($\rho_1$-$\rho_3$) du sous-ensemble utilisé dans l'étape d'apprentissage.

**2.** Procédé selon la revendication 1, dans lequel les ondes ultrasonores sont émises dans l'étape d'apprentissage et/ou l'étape d'inspection par au moins une zone d'émission ($\varepsilon_1$-$\varepsilon_3$) de la sonde de superficie égale ou supérieure à celle de chaque zone de réception ($\rho_1$-$\rho_3$).

**3.** Procédé selon la revendication 2, dans lequel la sonde (1) comporte un réseau (11,11a-11d) d'au moins trois transducteurs élémentaires ($C_1$-$C_{64}$) non alignés, chaque zone de réception ($\rho_1$-$\rho_3$) et chaque zone d'émission ($\varepsilon_1$-$\varepsilon_3$) comportant au moins un transducteur élémentaire.

**4.** Procédé selon l'une des revendications précédentes, dans lequel les au moins trois valeurs de temps de vol pour l'au moins une position d'apprentissage sont mesurées avec des zones de réception ($\rho_1$-$\rho_3$) non adjacentes de la sonde (1).

**5.** Procédé selon l'une des revendications précédentes dans lequel l'estimation de l'inclinaison locale de la face avant (21) de la pièce (2) pour l'au moins une position d'inspection est obtenue en estimant deux angles plans d'inclinaison locale (ix,iy) définis dans deux plans non parallèles entre eux et localement orthogonaux à ladite face avant de ladite pièce.

**6.** Procédé selon l'une des revendications précédentes, comportant une pluralité de positions d'apprentissage et dans lequel au moins trois valeurs de temps de vol sont mesurées pour chaque position d'apprentissage.

**7.** Procédé selon la revendication 6, comportant une pluralité de positions d'inspection, et dans lequel une estimation de l'inclinaison locale est calculée pour chaque position d'inspection par interpolation ou extrapolation d'estimations d'inclinaisons locales calculées pour différentes positions d'apprentissage.

**8.** Procédé selon la revendication 6, comportant une pluralité de positions d'inspection, et dans lequel une estimation de l'inclinaison locale est calculée pour chaque position d'inspection en fonction d'au moins trois valeurs de temps de vol mesurées pour au moins deux positions d'apprentissage différentes.

**9.** Dispositif de contrôle non-destructif par ultrasons d'une pièce (2), comportant une sonde (1) ultrasonore comportant un réseau matriciel (11,11a-11d) de transducteurs élémentaires ($C_1$-$C_{64}$) déterminant une pluralité de zones de réception ($\rho_1$-$\rho_3$) non toutes alignées, des moyens mécaniques (5) aptes à orienter la direction de propagation (D) des ondes ultrasonores émises par la sonde (1) et à déplacer ladite sonde par rapport à la pièce (2), et des moyens de commande (60) desdits moyens mécaniques, ledit dispositif comportant:

- des moyens de calcul (61) d'estimations d'inclinaisons locales d'une face avant (21) de la pièce (2) en fonction de valeurs de temps de vol mesurées au cours d'un apprentissage préalable de ladite face avant de la pièce (2) pour des ondes ultrasonores émises par la sonde (1) et reçues par un sous-ensemble de zones de réception comportant au moins trois zones de réception ($\rho_1$-$\rho_3$) non-alignées,
- des moyens de stockage (7) des estimations des inclinaisons locales,

et ledit dispositif étant **caractérisé en ce que**, au cours du contrôle non-destructif des caractéristiques structurelles de la pièce (2), les moyens de commande (60) sont adaptés pour orienter la sonde (1) en fonction des estimations des inclinaison locales mémorisées dans les moyens de stockage (7) et pour utiliser un nombre de zones de réception ($\rho_1$-$\rho_3$) supérieur au nombre de zones de réception ($\rho_1$-$\rho_3$) du sous-ensemble utilisé au cours de l'apprentissage préalable.

**10.** Dispositif selon la revendication 9, dans lequel le découpage du réseau matriciel (11,11a-11d) de la sonde (1) est de forme sensiblement rectangulaire ou carrée.

**11.** Dispositif selon la revendication 9 ou 10, dans lequel chaque transducteur élémentaire ($C_1$-$C_{64}$) est de forme rectangulaire ou hexagonale ou circulaire.

**Claims**

**1.** A method for the non-destructive ultrasound testing of a part (2), using an ultrasound probe (1) comprising a plurality of reception areas ($\rho_1$-$\rho_3$), not all of which are aligned, this method comprising an inspection step wherein ultrasound waves are emitted for at least one inspection position of said probe in the direction of the part (2), a training step wherein at least three time of flight values are measured for at least one training position of the probe (1) for ultrasound waves emitted by said probe, reflected by a front surface (21) of the part (2) and received by a subset of reception areas comprising at least three non-aligned reception areas ($\rho_1$-$\rho_3$),
and in that an estimate of a local incline of the front surface (21) of the part (2) is calculated for the at least one inspection position according to the at least three measured time of flight values to correct, during the inspection step, the orientation of a propagation direction (D) of the ultrasound waves emitted to guarantee a value of an angle of incidence on the front surface (21) of the part (2) substantially equal to a predefined desired value for the at least one inspection position, **characterised in that** the number of reception areas ($\rho_1$-$\rho_3$) used in the inspection step to receive the ultrasound waves reflected by the part (2) is higher than the number of reception areas ($\rho_1$-$\rho_3$) of the subset used in the training step.

2. A method according to claim 1, wherein the ultrasound waves are emitted in the training step and/or the inspection step by at least one emission area ($\varepsilon_1$-$\varepsilon_3$) of the probe with a surface area equal to or exceeding that of each reception area ($\rho_1$-$\rho_3$).

3. A method according to claim 2, wherein the probe (1) comprises a network (11, 11 a-11 d) of at least three non-aligned elementary transducers ($C_1$-$C_{64}$), where each reception area ($\rho_1$-$\rho_3$) and each emission area ($\varepsilon_1$-$\varepsilon_3$) comprise at least one elementary transducer.

4. A method according to one of the previous claims, wherein the at least three time of flight values for the at least one training position are measured with reception areas ($\rho_1$-$\rho_3$) of the probe that are not adjacent to each other (1).

5. A method according to one of the previous claims, wherein the estimate of the local incline of the front surface (21) of the part (2) for the at least one inspection position is obtained by estimating two planar angles of local inclination (ix, iy) defined in two planes not parallel to each other and locally orthogonal to said front surface of said part.

6. A method according to one of the previous claims, comprising a plurality of training positions and wherein at least three time of flight values are measured for each training position.

7. A method according to claim 6, comprising a plurality of inspection positions and wherein an estimate of the local incline is calculated for each inspection position by interpolation or extrapolation of local incline estimates calculated for different training positions.

8. A method according to claim 6, comprising a plurality of inspection positions and wherein an estimate of the local incline is calculated for each inspection position according to at least three time of flight values measured for at least two different training positions.

9. A device for the non-destructive ultrasound testing of a part (2) comprising an ultrasound probe (1) comprising a matrix network (11, 11 a-11 d) of elementary transducers ($C_1$-$C_{64}$) determining a plurality of reception areas ($\rho_1$-$\rho_3$), not all of which are aligned, mechanical means (5) adapted to orientate the propagation direction (D) of the ultrasound waves emitted by the probe (1) and to move said probe in relation to the part (2), and control means (60) for controlling said mechanical means, where said device comprises:

   - calculation means (61) for calculating local incline estimates for a front surface (21) of the part (2) according to time of flight values measured during a prior training step for said front surface of the part (2) for the ultrasound waves emitted by the probe (1) and received by a subset of reception areas comprising at least three non-aligned reception areas ($\rho_1$-$\rho_3$),
   - storage means (7) for storing the local incline estimates,

   and said device being **characterised in that**, during the non-destructive testing of the structural properties of the part (2), the control means (60) are adapted to orientate the probe (1) according to the local incline estimates recorded in the storage means (7) and to use a number of reception areas ($\rho_1$-$\rho_3$) higher than the number of reception areas ($\rho_1$-$\rho_3$) of the subset used during the prior training step.

10. A device according to claim 9, wherein the matrix network (11, 11 a-11 d) of the probe (1) is substantially rectangular or square in shape shape.

11. A device according to claim 9 or 10, wherein each elementary transducer ($C_1$-$C_{64}$) is rectangular, hexagonal or circular in shape.

**Patentansprüche**

1. Verfahren zur zerstörungsfreien Prüfung eines Werkstücks (2) durch Ultraschall, unter Verwendung einer Ultraschallsonde (1) umfassend eine Vielzahl von Empfangsbereichen ($\rho_1$-$\rho_3$), von denen nicht alle ausgerichtet sind, wobei das besagte Verfahren einen Inspektionsschritt umfasst, bei dem die Ultraschallwellen zumindest für eine Inspektionsposition der besagten Sonde in Richtung des Werkstücks (2) ausgesandt werden, einen Lernschritt, bei dem zumindest drei Flugzeitwerte für zumindest eine Lernposition der Sonde (1) für die von der besagten Sonde ausgesandten Ultraschallwellen gemessen werden, die von einer Vorderseite (21) des Werkstücks (2) reflektiert, und von einer Untereinheit der Empfangsbereiche empfangen werden, die zumindest drei Empfangsbereiche ($\rho_1$-$\rho_3$) umfasst, die nicht ausgerichtet sind, wobei ein Schätzwert für eine lokale Neigung der Vorderseite (21) des Werkstücks (2) für zumindest eine Inspektionssposition in Abhängigkeit der zumindest drei gemessenen Flugzeitwerte berechnet wird, um die Orientierung einer Propagationsrichtung (D) der Ultraschallwellen, die ausgesandt werden, im Inspektionsschritt zu korrigieren, um einen Wert eines Einfallswinkels auf der Vorderseite (21) des Werkstücks (2) zu gewährleisten, der in etwa gleich einem vorbestimmten Wert ist, der für die zumindest eine Inspektionsposition gewünscht wird, **dadurch gekennzeichnet, dass** die Anzahl der im Inspektionsschritt zum Empfang der vom Werkstück (2) reflektierten Ultraschallwellen verwendeten Empfangsbereiche ($\rho_1$-$\rho_3$) größer ist, als die Anzahl der Empfangsbereiche ($\rho_1$-$\rho_3$) der im Lernschritt verwendeten Untereinheit.

2. Verfahren nach Anspruch 1, bei dem die Ultraschallwellen in einem Lern- und/oder einem Inspektionsschritt von zumindest einem Sendebereich ($\varepsilon_1$- $\varepsilon_3$) der Sonde ausgesandt werden, deren Oberfläche gleich oder größer jener eines jeden Empfangsbereichs ($\rho_1$-$\rho_3$) ist.

3. Verfahren nach Anspruch 2, bei dem die Sonde (1) ein Netzwerk (11, 11 a-11 d) mit zumindest drei elementaren Transduktoren ($C_1$-$C_{64}$) umfasst, die nicht ausgerichtet sind, wobei jeder Empfangsbereich ($\rho_1$-$\rho_3$) und jeder Sendebereich ($\varepsilon_1$- $\varepsilon_3$) zumindest einen elementaren Transduktor umfasst.

4. Verfahren nach einem der vorherigen Ansprüche, bei dem die zumindest drei gemessenen Flugzeitwerte für die zumindest eine Lernposition mit nicht benachbarten Empfangsbereichen ($\rho_1$-$\rho_3$) der Sonde (1) gemessen werden.

5. Verfahren nach einem der vorherigen Ansprüche, bei dem der Schätzwert der lokalen Neigung der Vorderseite (21) des Werkstücks (2) für die zumindest eine Lernposition erhalten wird, indem man zwei ebene Winkel der lokalen Neigung (ix, iy) schätzt, die in zwei zueinander nicht parallelen, und lokal orthogonalen Ebenen zur besagten Vorderseite des besagten Werkstücks gebildet werden.

6. Verfahren nach einem der vorherigen Ansprüche, umfassend eine Vielzahl von Lernpositionen, und bei dem zumindest drei Flugzeitwerte für jede der Lernpositionen gemessen wird.

7. Verfahren nach Anspruch 6, umfassend eine Vielzahl von Inspektionspositionen, und bei dem ein Schätzwert der lokalen Neigung für jede Inspektionsposition durch Intrapolieren oder Extrapolieren von lokalen Neigungsschätzwerten berechnet wird, die für die verschiedenen Inspektionspositionen berechnet werden.

8. Verfahren nach Anspruch 6, umfassend eine Vielzahl von Inspektionspositionen, und bei dem ein Schätzwert der lokalen Neigung für jede Inspektionsposition in Abhängigkeit von zumindest drei Flugzeitwerten berechnet wird, die für zumindest zwei unterschiedliche Lernpositionen gemessen werden.

9. Vorrichtung zur zerstörungsfreien Prüfung eines Werkstücks (2) durch Ultraschall, umfassend eine Ultraschallsonde (1) mit einem Matrix-Netzwerk (11, 11a-11d) an elementaren Transduktoren ($C_1$-$C_{64}$) zur Bestimmung einer Vielzahl von Empfangsbereichen ($\rho_1$-$\rho_3$), von denen nicht alle ausgerichtet sind, mechanische Vorrichtungen (5), die geeignet sind, die Propagationsrichtung (D) der Ultraschallwellen zu orientieren, die von der Sonde (1) ausgesandt werden, und die besagte Sonde im Verhältnis zum Werkstück (2) zu versetzen, und Vorrichtungen zum Steuern (60) der besagten mechanischen Vorrichtungen, wobei die besagte Vorrichtung folgendes umfasst:

 - Vorrichtungen zum Berechnen (61) der Schätzwerte der lokalen Neigungen einer Vorderseite (21) eines Werkstücks (2) in Abhängigkeit von Flugzeitwerten, die im Laufe eines vorherigen Lernvorgangs der besagten Vorderseite des Werkstücks (2) für die Ultraschallwellen gemessen wurden, die von der Sonde (1) ausgesandt, und von einer Untereinheit an Empfangsbereichen mit zumindest drei nicht ausgerichteten Empfangsbereichen ($\rho_1$-$\rho_3$) empfangen wurden,
 - Vorrichtungen zum Ablegen (7) der Schätzwerte der lokalen Neigungen,

und die besagte Vorrichtung **dadurch gekennzeichnet ist, dass** Vorrichtungen zum Steuern (60) im Laufe der zerstörungsfreien Prüfung der strukturellen Merkmale des Werkstückes (2) angepasst sind, um die Sonde (1) in Abhängigkeit von den Schätzwerten der lokalen Neigungen, die in den Vorrichtungen zum Ablegen (7) gespeichert sind, zu orientieren, und um eine Anzahl an Empfangsbereichen ($\rho_1$-$\rho_3$) zu verwenden, die größer ist, als die Anzahl der Empfangsbereiche ($\rho_1$-$\rho_3$) der Untereinheit, die im Laufe des vorherigen Lernvorgangs verwendet wird.

10. Vorrichtung nach Anspruch 9, bei der die Aufteilung des Matrix-Netzwerks (11, 11a-11d) der Sonde (1) eine in etwa rechteckige oder quadratische Form aufweist.

11. Vorrichtung nach Anspruch 9 oder 10, bei der jeder elementare Transduktor ($C_1$-$C_{64}$) eine rechteckige oder hexagonale oder runde Form aufweist.

**Fig. 1**

**Fig. 2**

**Fig. 3a**

**Fig. 3b**

Fig. 3c

Fig. 3d

**Fig. 4**

**Fig. 5**

**Fig. 6**

Fig. 7a

Fig. 7b

Fig. 7c

Fig. 7d

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0489161 A